# EUROPEAN PATENT APPLICATION

(11) **EP 4 436 279 A1**
(43) Date of publication of application: **25.09.2024**
(21) Application number: 21963722.0
(22) Date of filing: 15.11.2021
(51) Int. Cl.: H04W 72/04

(54) **BEAM CAPABILITY REPORTING METHOD AND APPARATUS, DEVICE, AND STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: Kudlek, Franz Thomas
(86) International application number: PCT/CN2021/130738
(87) International publication number: WO 2023/082276

(57) **Abstract**

The present application relates to the field of mobile communication, and discloses a beam capability reporting method and apparatus, a device, and a storage medium. The method comprises: a first-type terminal sends capability reporting signaling to a network device, the capability reporting signaling carrying beam capability information, and the beam capability information indicating a beam capability that corresponds to a first link supported by the first-type terminal and a beam capability that corresponds to a second link, wherein the first-type terminal is connected to a second-type terminal by means of the first link, and the first-type terminal is connected to the network device by means of the second link. The present application solves the problem that the first-type terminal cannot report its own beam capability, and realizes that the network device configures a beam for the first-type terminal according to the beam capability, thereby improving the communication efficiency.

## Description

### TECHNICAL FIELD

The present disclosure relates to the field of mobile communication, and in particular to a beam capability reporting method, apparatus, device and storage medium.

### BACKGROUND

In the NR (New Radio) system, a first type terminal that can at least directionally amplify signals is proposed. There is a wireless link between the first type terminal and a second type terminal, and there is also a wireless link between the first type terminal and the network device. How the first type terminal reports the beam capabilities corresponding to the two links is an issue that needs to be solved urgently.

### SUMMARY

Embodiments of the present application provide a beam capability reporting method, apparatus, device, and storage medium, which solves the problem of the first type terminal being unable to report its own beam capability, and enables the network device to configure beams for the first type terminal according to the beam capability, thereby improving communication efficiency. The technical solutions are as follows:
According to one aspect of the present application, a beam capability reporting method is provided. The method is executed by a first type terminal. The method includes:
sending capability reporting signaling to a network device, the capability reporting signaling carrying beam capability information, and the beam capability information indicating a beam capability corresponding to a first link and a beam capability corresponding to a second link supported by the first type terminal;
wherein, the first type terminal is connected to a second type terminal through the first link, and the first type terminal is connected to the network device through the second link.

According to one aspect of the present application, a beam capability reporting method is provided. The method is executed by a first type terminal. The method includes:
receiving a capability reporting signaling sent by a first type terminal, wherein the capability reporting signaling carries beam capability information, and the beam capability information indicates a beam capability corresponding to a first link and a beam capability corresponding to a second link supported by the first type terminal;
wherein, the first type terminal is connected to a second type terminal through the first link, and the first type terminal is connected to the network device through the second link.

According to one aspect of the present application, a beam capability reporting apparatus is provided. The apparatus includes:
a sending module, configured to send capability reporting signaling to a network device, the capability reporting signaling carrying beam capability information, and the beam capability information indicating a beam capability corresponding to a first link and a beam capability corresponding to a second link supported by the first type terminal;
wherein, the first type terminal is connected to a second type terminal through the first link, and the first type terminal is connected to the network device through the second link.

According to one aspect of the present application, a beam capability reporting apparatus is provided. The apparatus includes:
a receiving module, configured to receive a capability reporting signaling sent by a first type terminal, wherein the capability reporting signaling carries beam capability information, and the beam capability information indicates a beam capability corresponding to a first link and a beam capability corresponding to a second link supported by the first type terminal;
wherein, the first type terminal is connected to a second type terminal through the first link, and the first type terminal is connected to the network device through the second link.

According to one aspect of the present application, a terminal is provided. The terminal includes: a processor; a transceiver connected to the processor; and a memory for storing executable instructions of the processor; wherein the processor is configured to load and execute the executable instructions to implement the beam capability reporting method as described above.

According to one aspect of the present application, a network device is provided. The terminal includes: a processor; a transceiver connected to the processor; and a memory for storing executable instructions of the processor; wherein the processor is configured to load and execute the executable instructions to implement the beam capability reporting method as described above.

According to one aspect of the present application, a computer-readable storage medium is provided. The readable storage medium stores executable program code. The executable program code is loaded and executed by a processor to implement the beam capability reporting method as described above.

According to one aspect of the present application, a chip is provided. The chip includes programmable logic circuits and/or program instructions. When the chip is run on a terminal or network device, it is used to implement the beam capability reporting method as described above.

According to one aspect of the present application, the embodiment of the present application provides a computer program product. When the computer program product is executed by a processor of a terminal or a network device, it is used to implement the beam capability reporting method in the above aspect.

The technical solutions provided by the embodiments of this application at least include the following beneficial effects:

According to the method, apparatus, device and storage media provided by the embodiments of this application, the first type terminal reports its own beam capability information to the network device through capability reporting signaling, and the beam capability corresponding to the first link and the beam capability corresponding to the second link of the first type terminal can be indicated through the beam capability information, which solves the problem of the first type of terminal being unable to report its own beam capability, and enables the network device to configure the beam for the first type terminal based on the beam capability, thereby improving communication efficiency.

### BRIEF DESCRIPTION OF THE DRAWINGS

In order to more clearly illustrate the technical solutions in the embodiments of the present application, the drawings needed to be used in the description of the embodiments will be briefly introduced below. Obviously, the drawings in the following description are only some embodiments of the present application. For those of ordinary skill in the art, other drawings can also be obtained based on these drawings without exerting creative efforts.
FIG. 1 illustrates a block diagram of a communication system provided by an exemplary embodiment of the present application.
FIG. 2 illustrates a flow chart of a beam capability reporting method provided by an exemplary embodiment of the present application.
FIG. 3 illustrates a block diagram of a communication system provided by an exemplary embodiment of the present application.
FIG. 4 illustrates a block diagram of a communication system provided by an exemplary embodiment of the present application.
FIG. 5 illustrates a flow chart of a beam capability reporting method provided by an exemplary embodiment of the present application.
FIG. 6 illustrates a block diagram of a beam capability reporting apparatus provided by an exemplary embodiment of the present application.
FIG. 7 illustrates a block diagram of a beam capability reporting apparatus provided by an exemplary embodiment of the present application.
FIG. 8 illustrates a block diagram of a beam capability reporting apparatus provided by an exemplary embodiment of the present application.
FIG. 9 illustrates a schematic structural diagram of a communication device provided by an exemplary embodiment of the present application.

### DETAILED DESCRIPTION

In order to make the purpose, technical solutions and advantages of the present application clearer, the embodiments of the present application will be further described in detail below with reference to the accompanying drawings.

Exemplary embodiments will be described in detail herein, examples of which are illustrated in the accompanying drawings. When the following description refers to the drawings, the same numbers in different drawings refer to the same or similar elements, unless otherwise indicated. The implementations described in the following exemplary embodiments do not represent all implementations consistent with this application. Rather, they are merely examples of apparatus and methods consistent with aspects of the application as detailed in the appended claims.

The terminology used in this application is for the purpose of describing particular embodiments only and is not intended to be limiting of the application. As used in this application and the appended claims, the singular forms "a", "the" and "said" are intended to include the plural forms as well, unless the context clearly dictates otherwise. It will also be understood that the term "and/or" as used herein refers to and includes any and all possible combinations of one or more of the associated listed items.

It should be understood that although the terms first, second, third, etc. may be used in this application to describe various information, the information should not be limited to these terms. These terms are only used to distinguish information of the same type from each other. For example, without departing from the scope of the present application, the first information may also be referred to as the second information, and similarly, the second information may also be referred to as the first information. Depending on the context, for example, the word "if' as used herein may be interpreted as "when" or "while" or "in response to determining".

Hereinafter, the application scenario of this application is explained:

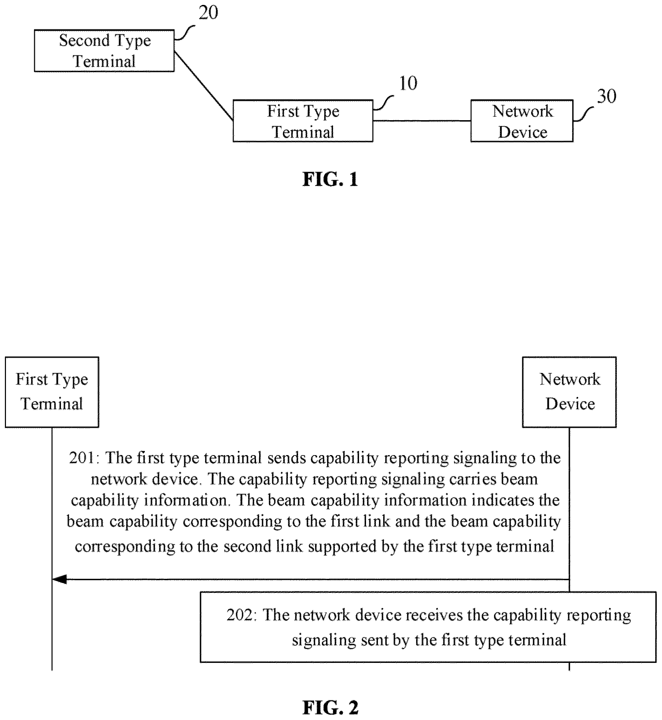

FIG. 1 illustrates a block diagram of a communication system provided by an exemplary embodiment of the present application. The communication system may include: a first type terminal 10, a second type terminal 20 and a network device 30.

The first type terminal 10 is a terminal that can at least directionally amplify signals. For example, the first type terminal 10 directionally amplifies signals at a target time, or amplifies signals in multiple directions at a target time, etc.

In some embodiments, the first type terminal 10 is connected to the second type terminal 20 and the network device 30 respectively.

In some embodiments, the first type terminal 10 includes an MT (Mobile Terminal) and an RF (Radio Frequency), and the MT is used for the communication between the first type terminal 10 and the network device 30.

For example, the first type terminal 10 is a smart repeater, or the first type terminal is other terminal, which is not limited in the embodiment of this application.

The second type terminal 20 is usually multiple in number, and one or more second type terminals 20 may be distributed in the cell managed by each network device 30. The second type terminal 20 may include various handheld devices with wireless communication functions, vehicle-mounted devices, wearable devices, computing devices or other processing devices connected to wireless modems, as well as various forms of user equipment (UE), Mobile Station (MS) and so on. For convenience of description, in the embodiment of this application, the above-mentioned devices are collectively referred to as the second type terminal.

The network device 30 is a device deployed in the access network to provide wireless communication functions for the second type terminal 20. The network device 30 may include various forms of macro base stations, micro base stations, relay stations, access points, etc. In systems using different radio access technologies, the names of devices with network device functions may be different. For example, in 5G NR systems, they are referred to as gNodeB or gNB. As communications technology evolves, the name of "network device" may change. For convenience of description, in the embodiment of the present application, the above-mentioned devices that provide wireless communication functions for the second type terminal 20 are collectively referred to as the network device. A connection can be established between the network device 30 and the second type terminal 20 through the first type terminal 10, so that communication, including signaling and data interaction, can be performed through the connection. The number of the network device 30 may be multiple, and two adjacent network device 30 may communicate in a wired or wireless manner. The second type terminal 20 can switch between different network devices 30, that is, establish connections with different network devices 30.

The "5G NR system" in the embodiment of this application may also be referred to as a 5G system or an NR system, while those skilled in the art can understand its meaning. The technical solutions described in the embodiments of this application can be applied to the 5G NR system, and can also be applied to subsequent evolution systems of the 5G NR system.

FIG. 2 illustrates a flow chart of a beam capability reporting method provided by an exemplary embodiment of the present application. It is applied to the first type terminal and network device illustrated in FIG. 1. The method includes at least part of the following content:
Step 201: The first type terminal sends capability reporting signaling to the network device. The capability reporting signaling carries beam capability information. The beam capability information indicates the beam capability corresponding to the first link and the beam capability corresponding to the second link supported by the first type terminal.

In the embodiment, the first type terminal is connected to the second type terminal through the first link, and the first type terminal is connected to the network device through the second link.

In some embodiments, the beam capability of the first type terminal includes analog beamforming capability or digital beamforming capability. The embodiments of this application do not limit the beam capability of the first type terminal.

In the embodiment of this application, the first type of terminal needs to report its own beam capability, then the first type of terminal can send capability reporting signaling to the network device, through which the beam capability information carried in the capability reporting signaling indicates its own beam capability.

In the embodiment, the first type terminal includes a first link and a second link. The first link is used to connect the first type terminal with the second type terminal. The second link is used to connect the first type terminal with the network device. The beam capability information indicates the beam capability corresponding to the first link and the beam capability corresponding to the second link.

In some embodiments, the first link is a service link, and the second link is a backhaul link; or the first link and the second link have other names, which are not limited in this application.

In some embodiments, the beam capability of the first type terminal includes the number of beams configured by the network device, or the beam capability of the first type terminal includes the number of beams used simultaneously, or the beam capability of the first type terminal includes the number of beams configured by the network device at the same time and the number of beams used simultaneously, or the beam capability of the first type terminal also includes other situations. The embodiment of the present application does no limit the beam capability of the first type terminal.

For example, the beam capability is represented by the number of spatial relationships, and the spatial relationships are used to indicate the beam direction of a specific spatial directivity.

Step 202: The network device receives the capability reporting signaling sent by the first type terminal.

After receiving the capability reporting signaling, the network device can determine the beam capability of the first type terminal indicated by the capability reporting signaling, then configure the beam according to the beam capability of the first type terminal, and perform signal transmission based on the configured beam.

It should be noted that the steps performed by the first type terminal can be individually implemented as one step, and the steps performed by the network device can be individually implemented as one step.

In the method provided by the embodiments of this application, the first type terminal reports its own beam capability information to the network device through capability reporting signaling, and the beam capability corresponding to the first link and the beam capability corresponding to the second link of the first type terminal can be indicated through the beam capability information, which solves the problem of the first type of terminal being unable to report its own beam capability, and enables the network device to configure the beam for the first type terminal based on the beam capability, thereby improving communication efficiency.

Based on the embodiment illustrated in FIG. 2, when a first type terminal reports its own beam capability through the capability reporting signaling, it may report one type of beam capability information to indicate the beam capability of the first type terminal, or it may report two types of beam capability information to indicate the beam capability of the first type terminal. The two cases are described hereinafter.

The first case: reporting two beam capabilities to indicate the beam capabilities of the first type of terminal.

In this case, the capability reporting signaling may include one signaling or two signalings. One signaling or two signalings included in the capability reporting signaling will be described below.
(1) The capability reporting signaling includes a first signaling and a second signaling. The first signaling carries the first beam capability information. The second signaling carries the second beam capability information. The first beam capability information indicates the beam capability corresponding to the first link, and the second beam capability information indicates the beam capability corresponding to the second link.

In the embodiment of this application, the first type of terminal indicates the beam capabilities corresponding to the first link and the second link through two pieces of beam capability information, and can carry the beam capability information through two signalings respectively to report the beam capabilities corresponding to the two links.

It should be noted that the first type terminal can send two signalings at different timings. For example, the first type terminal may first send the first signaling and then the second signaling, or the first type terminal may first send the second signaling and then the first signaling. Alternatively, the first type terminal may simultaneously send the first signaling and the second signaling. The embodiment of this application does not limit the order in which the first signaling and the second signaling are sent.

In some embodiments, the number of spatial relationships in the first beam capability information included in the first signaling is no less than a first threshold and no more than a second threshold, where the first threshold is less than the second threshold.

In the embodiment, this spatial relationship is used to indicate the beam direction of a specific spatial directivity.

Optionally, in the case where the subcarrier spacing of the first link is smaller than the first frequency, the second threshold is a third threshold. In the case where the subcarrier spacing of the first link is not less than the first frequency, the second threshold is a fourth threshold. Moreover, the third threshold is smaller than the fourth threshold.

For example, the first beam capability information included in the first signaling indicates that the minimum number of configurable spatial relationships of the first link is 16 and the maximum number is 64, or the maximum number of configurable spatial relationships is 128. It should be noted that when the subcarrier spacing is less than 240KHz (kilohertz), the maximum number is 64, and when the subcarrier spacing is not less than 240KHz, the maximum number is 128.

It should be noted that the spatial relationship in the embodiment of the present application can be replaced by beams, which is not limited in the embodiment of the present application.

In some embodiments, the number of spatial relationships in the second beam capability information included in the second signaling is not less than the fifth threshold.

Optionally, when the subcarrier spacing of the second link is less than the second frequency, the fifth threshold is a sixth threshold, and when the subcarrier spacing of the second link is not less than the second frequency, the fifth threshold is the seventh threshold, wherein the sixth threshold is smaller than the seventh threshold.

For example, the second beam capability information included in the second signaling indicates that the minimum number of configurable spatial relationships of the second link is 64, or the minimum number of configurable spatial relationships is 128. It should be noted that when the subcarrier spacing is less than 240KHz (kilohertz), the minimum number is 64, and when the subcarrier spacing is not less than 240KHz, the minimum number is 128.

Hereinafter, the parameters carried by the first beam capability information and the second beam capability information are explained by way of example:
spatialRelationsServiceLink - > maxNumberConfiguredSpatialRelations = 64;
spatialRelationsBackhaulLink -> maxNumberConfiguredSpatialRelations = 32;
nrofPanelsServiceLink = 2;
nrofPanelsBackhaulLink = 2;
supportedSRS-TxPortSwitchServiceLink = 4T4R;
supportedSRS-TxPortSwitchBackhaulLink = 4T4R.

In the embodiment, the maximum number of spatial relationships that can be configured for the service link is 64, the number of antenna panels is 2, the supported transmitting antennas for sending detection signals are 4 antennas, and the receiving antennas are 4 antennas. The maximum number of spatial relationships that can be configured for the backhaul link is 32, the number of antenna panels is 2, the supported transmitting antennas for sending detection signals are 4 antennas, and the receiving antennas are 4 antennas.

In some embodiments, when the first link and the second link do not share beam capabilities, the first signaling carries the first beam capability information, and the second signaling carries the second beam capability information.

In this embodiment of the present application, the first type terminal will determine whether the first link and the second link share beam capabilities to determine the way to send signaling. If the first type terminal determines that the first link and the second link do not share beam capabilities, the first signaling carries the first beam capability information, and the second signaling carries the second beam capability information.

Optionally, the first beam capability information and the second beam capability information in the embodiment of the present application are the same, that is, the beam capability corresponding to the first link indicated by the first beam capability information and the beam capability corresponding to the second link indicated by the second beam capability information are the same.

Optionally, the first beam capability and the second beam capability in the embodiment of the present application are different, that is, the beam capability corresponding to the first link indicated by the first beam capability information and the beam capability corresponding to the second link indicated by the second beam capability information are different.

It should be noted that the first type of terminal in the embodiment of the present application includes a first antenna unit and a second antenna unit. The physical orientations of the first antenna unit and the second antenna unit are different or incoherent. The first link uses the first antenna unit, and the second link uses the second antenna unit.

In the embodiment, the first antenna unit and the second antenna unit that have different or incoherent physical orientations of the first type terminal can be spatially distinguished, so that the first link uses the first antenna unit and the second link uses the second antenna unit.

In some embodiments, the first antenna unit includes at least one antenna oriented at different angles. The second antenna unit also includes at least one antenna oriented at different angles.

For example, the first link of the first type terminal uses 2 antenna units, and is provided with 4 transmitting antennas and 4 receiving antennas. The second link uses 2 antenna units, and is provided with 4 transmitting antennas and 4 receiving antennas.

It should be noted that the antenna unit in the embodiment of the present application may also be referred to as an antenna panel, or the antenna unit may be referred to as another name, which is not limited by the embodiment of the present application. Additionally, at least one antenna is included in the antenna unit or antenna panel.

(2) The capability reporting signaling includes a third signaling, and the third signaling carries the first beam capability information and the second beam capability information.

The first beam capability information indicates the beam capability corresponding to the first link, and the second beam capability information indicates the beam capability corresponding to the second link.

In this embodiment of the present application, the first type of terminal indicates the beam capabilities corresponding to the first link and the second link through two pieces of beam capability information, and can carry the two pieces of beam capability information through one signaling to report the beam capabilities corresponding to the two links.

In the embodiment of this application, the first beam capability information and the second beam capability information carried by the third signaling are similar to the first beam capability information carried by the first signaling and the second beam carried by the second signaling in the above embodiment, which will not be described again here.

In some embodiments, the third signaling indicates the first beam capability information and the second beam capability information by the sequence of positions.

Optionally, the third signaling includes two pieces of beam capability information, the beam capability information located at the first position is the first beam capability information, and the beam capability information located at the second position is the second beam capability information. Alternatively, the beam capability information located at the first position is the second beam capability information, and the beam capability information located at the second position is the first beam capability information.

In other embodiments, the third signaling indicates the first beam capability information and the second beam capability information in the form of identifiers.

Optionally, the third signaling includes a first identifier and beam capability information corresponding to the first identifier, and a second identifier and beam capability information corresponding to the second identifier. The beam capability information corresponding to the first identifier indicates the first beam capability information, and the beam capability information corresponding to the second identifier indicates the second beam capability information.

For example, the first identifier is 1 and the second identifier is 0, or the first identifier is 0 and the second identifier is 1.

In some embodiments, in the case where the first link and the second link do not share beam capabilities, the third signaling carries the first beam capability information and the second beam capability information.

In this embodiment of the present application, the first type terminal will determine whether the first link and the second link share beam capabilities to determine the way to send signaling. If the first type terminal determines that the first link and the second link do not share beam capabilities, the first beam capability and the second beam capability information are carried in the capability reporting signaling.

Optionally, the first beam capability information and the second beam capability information in the embodiment of the present application are the same, that is, the beam capability corresponding to the first link indicated by the first beam capability information and the beam capability corresponding to the second link indicated by the second beam capability information are the same.

Optionally, the first beam capability and the second beam capability in the embodiment of the present application are different, that is, the beam capability corresponding to the first link indicated by the first beam capability information and the beam capability corresponding to the second link indicated by the second beam capability information are different.

It should be noted that the first type of terminal in the embodiment of the present application includes a first antenna unit and a second antenna unit. The physical orientations of the first antenna unit and the second antenna unit are different or incoherent. The first link uses the first antenna unit, and the second link uses the second antenna unit.

In the embodiment, the first antenna unit and the second antenna unit that have different or incoherent physical orientations of the first type terminal can be spatially distinguished, so that the first link uses the first antenna unit and the second link uses the second antenna unit.

In some embodiments, the first antenna unit includes at least one antenna oriented at different angles. The second antenna unit also includes at least one antenna oriented at different angles.

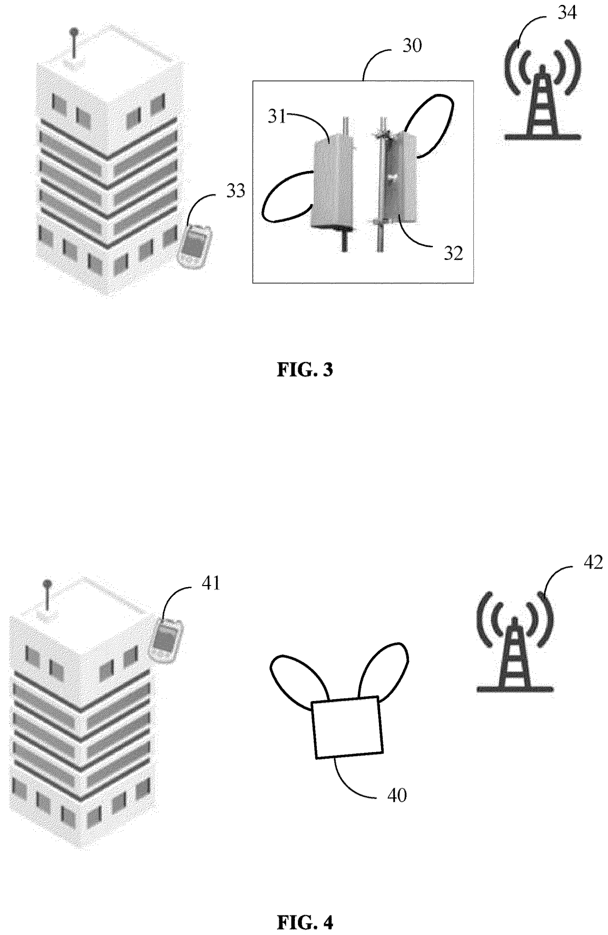

For example, as illustrated in FIG. 3, the first type terminal 30 includes a first antenna unit 31 and a second antenna unit 32. The two antenna units are in opposite directions, the first antenna unit 31 points to the second type terminal 33, and the second antenna unit 32 points to the network device 34. The first link and the second link of the first type terminal 30 do not share the beam capability, so the first type terminal 30 reports its own beam capabilities through two pieces of beam capability information.

It should be noted that the embodiment of the present application only takes the first type of terminal sending two pieces of beam capability information as an example for explanation. In another embodiment, the first type terminal transmits two pieces of beam capability information when it is not higher than the second type terminal.

In the method provided by the embodiments of this application, the beam capabilities of the first type terminal are reported through two pieces of beam capability information. The two pieces of beam capability information corresponds to the beam capabilities of the first link and the second link of the first type terminal respectively. This method can separately report the beam capabilities of the two links, thereby solving the problem that the first type of terminal cannot report its own beam capabilities, and improving communication efficiency.

The second case: reporting one type of beam capability information to indicate the beam capability of the first type terminal.

In this embodiment of the present application, the capability reporting signaling carries third beam capability information, and the first type terminal indicates the shared beam capability of the first link and the second link of the first type terminal through the third beam capability information.

In this embodiment of the present application, the first type terminal indicates the beam capabilities corresponding to the first link and the second link of the first type terminal through one piece of third beam capability information.

In some embodiments, the number of spatial relationships in the third beam capability information of the capability reporting signaling is not less than an eighth threshold and not greater than a ninth threshold, where the eighth threshold is less than the ninth threshold.

Optionally, when the subcarrier spacing of the first type terminal is less than the third frequency, the ninth threshold is the tenth threshold, and when the subcarrier spacing is not less than the third frequency, the ninth threshold is the eleventh threshold. In the embodiment, the third threshold is smaller than the fourth threshold.

For example, the third beam capability information included in the capability reporting signaling indicates that the minimum number of configurable spatial relationships of the first link is 16 and the maximum number is 64, or the maximum number of configurable spatial relationships is 128. It should be noted that when the subcarrier spacing is less than 240KHz (kilohertz), the maximum number is 64, and when the subcarrier spacing is not less than 240KHz, the maximum number is 128.

Hereinafter, the parameters carried by the third beam capability information are explained by way of example:
spatialRelations - > maxNumberConfiguredSpatialRelations = 64;
nrofPanels =4;
supportedSRS-TxPortSwitch = 4T4R.

In the embodiment, the maximum number of configurable spatial relationships in the third beam capability information is 64, the number of antenna panels is 4, the supported transmitting antennas for sending detection signals are 4 antennas, and the supported receiving antennas are 4 antennas.

In some embodiments, when the first link and the second link share beam capabilities, the capability reporting signaling carries the third beam capability information.

Optionally, the first type terminal includes one or more antenna units, and the physical directions of the multiple antenna units are the same or coherent.

For example, as illustrated in FIG. 4, the first type terminal 40 includes an antenna unit, and the antenna unit faces upward. The antenna unit can point to the second type terminal 41, and can also point to the network device 42, then the first link and the second link of the first type terminal share the beam capability, and the terminal reports its own beam capability through one piece of beam capability information.

It should be noted that the above embodiments can be split into new embodiments or combined with each other into new embodiments. This application does not limit the way for splitting and combination.

In the method provided by the embodiments of this application, the beam capabilities of the first type of terminal is reported through universal beam capability information. The first link and the second link of the first type of terminal share the beam capabilities indicated by the beam capability information, achieving common reporting of the beam capabilities of the two links, and then solving the problem of the first type of terminal being unable to report its own beam capabilities and improving the communication efficiency.

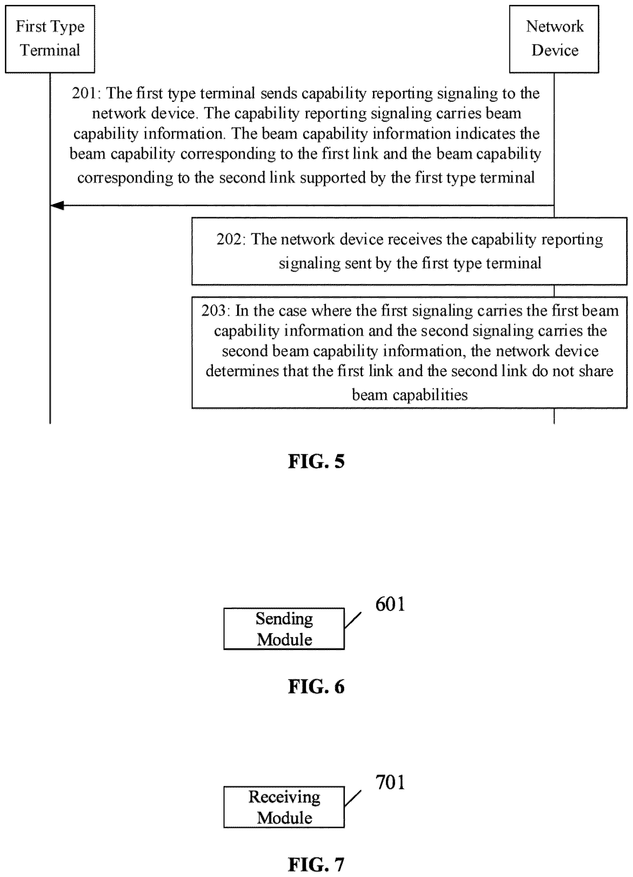

Based on the embodiment illustrated in FIG. 2, the network device will determine, based on the received capability report signaling, whether the first link and the second link of the first type terminal share beam capabilities. See FIG. 5, the method includes:
Step 203: In the case where the first signaling carries the first beam capability information and the second signaling carries the second beam capability information, the network device determines that the first link and the second link do not share beam capabilities.

In the embodiment of this application, if the first type terminal determines that the first link and the second link do not share beam capabilities, it will use two signalings to send the beam capability information of the two links respectively. If the network device respectively receives the first signaling and the second signaling, it can be determined that the first link and the second link do not share beam capabilities.

In the method provided by the embodiments of this application, when the network device determines that the first type terminal reports the beam capability of the first type terminal through two pieces of beam capability information, it can not only determine based on the reported beam capability that the first link and the second link of the first type terminal do not share beam capabilities, and can also configure the beams according to the beam capabilities reported by the first type of terminal, which improves communication efficiency.

It should be noted that the embodiment of the present application only exemplifies that the first signaling carries the first beam capability information, and the second signaling carries the second beam capability information. In another embodiment, the first beam capability information and the second beam capability information may also be carried in the third signaling. At this time, the network device determines that the first link and the second link do not share beam capabilities.

In the embodiment of this application, if the first type terminal determines that the first link and the second link do not share beam capabilities, it can use one signaling to send the beam capability information of the two links. If the network device determines that the received signaling includes two pieces of beam capability information, it can be determined that the first link and the second link do not share beam capabilities.

In the method provided by the embodiments of this application, when the network device determines that the first type terminal reports the beam capability of the first type terminal through two pieces of beam capability information, it can not only determine based on the reported beam capability that the first link and the second link of the first type terminal do not share beam capabilities, and can also configure the beams according to the beam capabilities reported by the first type of terminal, which improves communication efficiency.

In other embodiments, when the capability reporting signaling carries the third beam capability information, the network device determines that the first link and the second link share the beam capability.

In the embodiment of this application, if the first type terminal determines that the first link and the second link share beam capabilities, it can send a piece of beam capability information to indicate the beam capabilities of the two links. If the network device determines that the received signaling includes a piece of beam capability information, it can determine that the first link and the second link share beam capabilities.

In the method provided by the embodiments of this application, when the network device determines that the first type terminal reports the beam capability of the first type terminal through a piece of beam capability information, it can not only determine that the first link and the second link of the first type terminal share beam capabilities based on the reported beam capability, and can also configure the beam based on the beam capabilities reported by the first type of terminal, which improves communication efficiency.

FIG. 6 illustrates a block diagram of a beam capability reporting apparatus provided by an exemplary embodiment of the present application. Referring to FIG. 6, the apparatus includes:
a sending module 601, configured to send capability reporting signaling to a network device, the capability reporting signaling carrying beam capability information, and the beam capability information indicating a beam capability corresponding to a first link and a beam capability corresponding to a second link supported by the first type terminal;
wherein, the first type terminal is connected to a second type terminal through the first link, and the first type terminal is connected to the network device through the second link.

In some embodiments, the capability reporting signaling includes a first signaling and a second signaling, the first signaling carries first beam capability information, and the second signaling carries second beam capability information;
or,
wherein the capability reporting signaling includes a third signaling, and the third signaling carries the first beam capability information and the second beam capability information;
wherein, the first beam capability information indicates the beam capability corresponding to the first link, and the second beam capability information indicates the beam capability corresponding to the second link.

In some embodiments, in a case that the first link and the second link do not share beam capabilities, the first signaling carries the first beam capability information and the second signaling carries the second beam capability information;
or,
in a case that the first link and the second link do not share beam capabilities, the third signaling carries the first beam capability information and the second beam capability information.

In some embodiments, the first type terminal includes a first antenna unit and a second antenna unit, and a physical orientation of the first antenna unit is different from or incoherent to a physical orientation of the second antenna unit; and
the first link uses the first antenna unit and the second link uses the second antenna unit.

In some embodiments, the first beam capability information and the second beam capability information are same;
or,
wherein the first beam capability information is different from the second beam capability information.

In some embodiments, the capability reporting signaling carries third beam capability information.

In some embodiments, in a case that the first link and the second link share beam capabilities, the capability reporting signaling carries the third beam capability information.

In some embodiments, the first type terminal includes one antenna unit or a plurality of antenna units, and physical orientations of the plurality of antenna units are same or coherent.

It should be noted that when implementing the functions of the apparatus provided by the above embodiments, the division of the above functional modules is used only as an example. In practical applications, the above functions can be allocated to different functional modules according to needs, that is, the internal structure of the apparatus is divided into different functional modules to complete all or part of the functions described above. In addition, the apparatus and method embodiments provided in the above embodiments belong to the same concept, and the specific implementation process can be found in the method embodiments, which will not be described again here.

FIG. 7 illustrates a block diagram of a beam capability reporting apparatus provided by an exemplary embodiment of the present application. Referring to FIG. 7, the apparatus includes:
a receiving module 701, configured to receive a capability reporting signaling sent by a first type terminal, wherein the capability reporting signaling carries beam capability information, and the beam capability information indicates a beam capability corresponding to a first link and a beam capability corresponding to a second link supported by the first type terminal;
wherein, the first type terminal is connected to a second type terminal through the first link, and the first type terminal is connected to the network device through the second link.

In some embodiments, the capability reporting signaling includes a first signaling and a second signaling, the first signaling carries first beam capability information, and the second signaling carries second beam capability information;
or,
wherein the capability reporting signaling includes a third signaling, and the third signaling carries the first beam capability information and the second beam capability information;
wherein, the first beam capability information indicates the beam capability corresponding to the first link, and the second beam capability information indicates the beam capability corresponding to the second link.

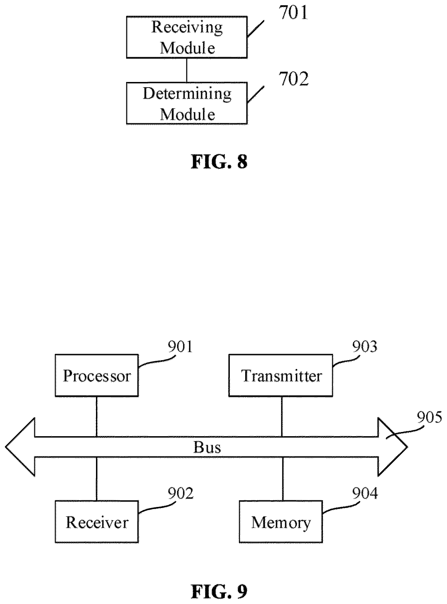

In some embodiments, referring to FIG. 8, the apparatus further includes:
a determining module 702, configured to determine, in a case that the first signaling carries the first beam capability information and the second signaling carries the second beam capability information, that the first link and the second link do not share beam capabilities;
   or,
the determining module 702 is configured to determine, in a case that the third signaling carries the first beam capability information and the second beam capability information, that the first link and the second link do not share beam capability.

In some embodiments, the first beam capability information and the second beam capability information are same;
or,
wherein the first beam capability information is different from the second beam capability information.

In some embodiments, the capability reporting signaling carries third beam capability information.

In some embodiments, the apparatus further includes:
a determining module 702, configured to determine, in a case that the capability reporting signaling carries the third beam capability information, that the first link and the second link share beam capabilities.

It should be noted that when implementing the functions of the apparatus provided by the above embodiments, the division of the above functional modules is used only as an example. In practical applications, the above functions can be allocated to different functional modules according to needs, that is, the internal structure of the apparatus is divided into different functional modules to complete all or part of the functions described above. In addition, the apparatus and method embodiments provided in the above embodiments belong to the same concept, and the specific implementation process can be found in the method embodiments, which will not be described again here.

FIG. 9 illustrates a schematic structural diagram of a communication device provided by an exemplary embodiment of the present application. The communication device includes: a processor 901, a receiver 902, a transmitter 903, a memory 904 and a bus 905.

The processor 901 includes one or more processing cores. The processor 901 executes various functional applications and information processing by running software programs and modules.

The receiver 902 and the transmitter 903 can be implemented as a communication component, and the communication component can be a communication chip.

The memory 904 is connected to the processor 901 through the bus 905.

The memory 904 can be used to store at least one program code, and the processor 901 is used to execute the at least one program code to implement each step in the above method embodiment.

Furthermore, the communication device may be a terminal or a network device. The memory 904 may be implemented by any type of volatile or non-volatile storage device, or a combination thereof. The volatile or non-volatile storage device includes but is not limited to: magnetic or optical disks, Electrically Erasable Programmable Read Only Memory (EEPROM), Erasable Programmable Read Only Memory (EPROM), Static Read Only Memory (SRAM), Read Only Memory (ROM), Magnetic Memory, Flash Memory, and Programmable Read Only Memory (PROM).

In an exemplary embodiment, a computer-readable storage medium is also provided, with executable program code stored in the readable storage medium, and the executable program code is loaded and executed by a processor to implement the beam capability reporting method performed by the communication device provided by each of the above method embodiments.

In an exemplary embodiment, a chip is provided. The chip includes programmable logic circuits and/or program instructions. When the chip is run on a terminal or network device, it is used to implement the beam capability reporting method provided by each of the method embodiments.

In an exemplary embodiment, a computer program product is provided. When the computer program product is executed by a processor of a terminal or a network device, it is used to implement the beam capability reporting method provided by each of the above method embodiments.

Those of ordinary skill in the art can understand that all or part of the steps to implement the above embodiments can be completed by hardware, or can be completed by instructing relevant hardware through a program. The program can be stored in a computer-readable storage medium. The above-mentioned storage media can be read-only memory, magnetic disks or optical disks, etc.

The above are only optional embodiments of the present application and are not intended to limit the present application. Any modifications, equivalent substitutions, improvements, etc. made within the spirit and principles of the present application shall be included within the protection scope of the present application.

## Claims

1. A method for reporting beam capability, executed by a first type terminal, and comprising:
sending capability reporting signaling to a network device, the capability reporting signaling carrying beam capability information, and the beam capability information indicating a beam capability corresponding to a first link and a beam capability corresponding to a second link supported by the first type terminal;
wherein, the first type terminal is connected to a second type terminal through the first link, and the first type terminal is connected to the network device through the second link.

2. The method according to claim 1, wherein the capability reporting signaling comprises a first signaling and a second signaling, the first signaling carries first beam capability information, and the second signaling carries second beam capability information;
or,
wherein the capability reporting signaling comprises a third signaling, and the third signaling carries the first beam capability information and the second beam capability information;
wherein, the first beam capability information indicates the beam capability corresponding to the first link, and the second beam capability information indicates the beam capability corresponding to the second link.

3. The method according to claim 2, wherein in a case that the first link and the second link do not share beam capabilities, the first signaling carries the first beam capability information and the second signaling carries the second beam capability information;
or,
in a case that the first link and the second link do not share beam capabilities, the third signaling carries the first beam capability information and the second beam capability information.

4. The method according to claim 2 or 3, wherein the first type terminal comprises a first antenna unit and a second antenna unit, and a physical orientation of the first antenna unit is different from or incoherent to a physical orientation of the second antenna unit; and
the first link uses the first antenna unit and the second link uses the second antenna unit.

5. The method according to any one of claims 2 to 4, wherein the first beam capability information and the second beam capability information are same;
or,
wherein the first beam capability information is different from the second beam capability information.

6. The method according to claim 1, wherein the capability reporting signaling carries third beam capability information.

7. The method according to claim 6, wherein,
in a case that the first link and the second link share beam capabilities, the capability reporting signaling carries the third beam capability information.

8. The method according to claim 6 or 7, wherein the first type terminal comprises one antenna unit or a plurality of antenna units, and physical orientations of the plurality of antenna units are same or coherent.

9. A method for reporting beam capability, executed by a network device, and comprising:
receiving a capability reporting signaling sent by a first type terminal, wherein the capability reporting signaling carries beam capability information, and the beam capability information indicates a beam capability corresponding to a first link and a beam capability corresponding to a second link supported by the first type terminal;
wherein, the first type terminal is connected to a second type terminal through the first link, and the first type terminal is connected to the network device through the second link.

10. The method according to claim 9, wherein the capability reporting signaling comprises a first signaling and a second signaling, the first signaling carries first beam capability information, and the second signaling carries second beam capability information;
or,
wherein the capability reporting signaling comprises a third signaling, and the third signaling carries the first beam capability information and the second beam capability information;
wherein, the first beam capability information indicates the beam capability corresponding to the first link, and the second beam capability information indicates the beam capability corresponding to the second link.

11. The method according to claim 10, further comprising:
determining, in a case that the first signaling carries the first beam capability information and the second signaling carries the second beam capability information, that the first link and the second link do not share beam capabilities;
or,
determining, in a case that the third signaling carries the first beam capability information and the second beam capability information, that the first link and the second link do not share beam capability.

12. The method according to claim 10 or 11, wherein the first beam capability information and the second beam capability information are same;
or,
wherein the first beam capability information is different from the second beam capability information.

13. The method according to claim 9, wherein the capability reporting signaling carries third beam capability information.

14. The method according to claim 13, further comprising:
determining, in a case that the capability reporting signaling carries the third beam capability information, that the first link and the second link share beam capabilities.

15. An apparatus for reporting beam capability, comprising:
a sending module, configured to send capability reporting signaling to a network device, the capability reporting signaling carrying beam capability information, and the beam capability information indicating a beam capability corresponding to a first link and a beam capability corresponding to a second link supported by the first type terminal;
wherein, the first type terminal is connected to a second type terminal through the first link, and the first type terminal is connected to the network device through the second link.

16. The apparatus according to claim 15, wherein the capability reporting signaling comprises a first signaling and a second signaling, the first signaling carries first beam capability information, and the second signaling carries second beam capability information;
or,
wherein the capability reporting signaling comprises a third signaling, and the third signaling carries the first beam capability information and the second beam capability information;
wherein, the first beam capability information indicates the beam capability corresponding to the first link, and the second beam capability information indicates the beam capability corresponding to the second link.

17. The apparatus according to claim 16, wherein in a case that the first link and the second link do not share beam capabilities, the first signaling carries the first beam capability information and the second signaling carries the second beam capability information;
or,
in a case that the first link and the second link do not share beam capabilities, the third signaling carries the first beam capability information and the second beam capability information.

18. The apparatus according to claim 16 or 17, wherein the first type terminal comprises a first antenna unit and a second antenna unit, and a physical orientation of the first antenna unit is different from or incoherent to a physical orientation of the second antenna unit; and
the first link uses the first antenna unit and the second link uses the second antenna unit.

19. The apparatus according to any one of claims 16 to 18, wherein the first beam capability information and the second beam capability information are same;
or,
wherein the first beam capability information is different from the second beam capability information.

20. The apparatus according to claim 15, wherein the capability reporting signaling carries third beam capability information.

21. The apparatus according to claim 20, wherein,
in a case that the first link and the second link share beam capabilities, the capability reporting signaling carries the third beam capability information.

22. The apparatus according to claim 20 or 21, wherein the first type terminal comprises one antenna unit or a plurality of antenna units, and physical orientations of the plurality of antenna units are same or coherent.

23. An apparatus for reporting beam capability, comprising:
a receiving module, configured to receive a capability reporting signaling sent by a first type terminal, wherein the capability reporting signaling carries beam capability information, and the beam capability information indicates a beam capability corresponding to a first link and a beam capability corresponding to a second link supported by the first type terminal;
wherein, the first type terminal is connected to a second type terminal through the first link, and the first type terminal is connected to the network device through the second link.

24. The apparatus according to claim 23, wherein the capability reporting signaling comprises a first signaling and a second signaling, the first signaling carries first beam capability information, and the second signaling carries second beam capability information;
or,
wherein the capability reporting signaling comprises a third signaling, and the third signaling carries the first beam capability information and the second beam capability information;
wherein, the first beam capability information indicates the beam capability corresponding to the first link, and the second beam capability information indicates the beam capability corresponding to the second link.

25. The apparatus according to claim 24, further comprising:
a determining module, configured to determine, in a case that the first signaling carries the first beam capability information and the second signaling carries the second beam capability information, that the first link and the second link do not share beam capabilities;
or,
the determining module is configured to determine, in a case that the third signaling carries the first beam capability information and the second beam capability information, that the first link and the second link do not share beam capability.

26. The apparatus according to claim 24 or 25, wherein the first beam capability information and the second beam capability information are same;
or,
wherein the first beam capability information is different from the second beam capability information.

27. The apparatus according to claim 23, wherein the capability reporting signaling carries third beam capability information.

28. The apparatus according to claim 27, further comprising:
a determining module, configured to determine, in a case that the capability reporting signaling carries the third beam capability information, that the first link and the second link share beam capabilities.

29. A terminal, comprising:
a processor; and
a transceiver connected to the processor;
wherein, the processor is configured to load and execute executable instructions to implement the method for reporting beam capability according to any one of claims 1 to 8.

30. A network device, comprising:
a processor; and
a transceiver connected to the processor;
wherein, the processor is configured to load and execute executable instructions to implement the method for reporting beam capability according to any one of claims 9 to 14.

31. A computer-readable storage medium, having stored therein executable program codes, wherein the executable program codes are loaded and executed by a processor to implement the method for reporting beam capability according to any one of claims 1 to 14.

32. A computer program product, which when being executed by a processor of a terminal or a network device, is used to implement the method for reporting beam capability according to any one of claims 1 to 14.
